# FASCICULE DE BREVET EUROPEEN

(11) **EP 0 520 863 B1**
(45) Date de publication et mention de la délivrance du brevet: **26.07.1995**
(21) Numéro de dépôt: 92401693.4
(22) Date de dépôt: 18.06.1992
(51) Int. Cl.: A23L 3/3418, A23B 7/148

(54) **Procédé et dispositif d'établissement d'une atmosphère controlée dans des compartiments d'une enceinte de conservation de produits alimentaires végétaux frais**
Verfahren und Vorrichtung zur Herstellung einer kontrollierten Atmosphäre in Abteilungen eines Aufbewahrungsräumes für frische pflanzliche Lebensmittel
Process and apparatus for producing a controlled atmosphere in a partitioned container for preserving fresh vegetable food products

(30) Priorité: 28.06.1991 FR 9108060
(43) Date de publication de la demande: 30.12.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barbe, Christian, F-92260 Fontenay-aux-Roses (FR); Fillet, Frédéric, F-92130 Issy-les-Moulineaux (FR)
(74) Mandataire: Le Moenner, Gabriel

(56) Documents cités:
- EP-A- 0 160 325
- EP-A- 0 292 834
- EP-A- 0 315 309
- FR-A- 2 521 402

## Description

La présente invention concerne un procédé et un dispositif d'établissement d'une atmosphère contrôlée à faible teneur en oxygène dans au moins un premier et un second compartiments d'une enceinte de conservation de produits végétaux alimentaires frais au moyen d'une installation de séparation d'air non cryogénique.

Le stockage de longue durée de certains produits agricoles, notamment des fruits, tels que les pommes ou les kiwis, est assuré de façon courante dans des enceintes réfrigérées. Certaines installations récentes prévoient en outre le maintien dans cette enceinte d'une atmosphère contrôlée à faible teneur en oxygène et en dioxyde de carbone, typiquement 2 % pour chacun de ces composants, obtenue par séparation de l'air, par perméation ou adsorption, et réduction du CO₂ sur charbon actif. Ce type d'atmosphère ne permet toutefois la bonne conservation de l'aspect du fruit qu'avec l'application conjointe de produits anti-oxydants.

Le document EP-A-0.160.325 décrit ainsi un dispositif d'établissement d'une atmosphère contrôlée utilisant des adsorbeurs de dioxyde de carbone. Le document EP-A-0.315.309 décrit un dispositif d'établissement d'une atmosphère contrôlée utilisant un séparateur à membrane unique.

La Demanderesse a constaté qu'une conservation de longue durée sans adjonction de produits anti-oxydants était possible avec une atmosphère contenant au maximum 1 % d'oxygène et 1 % de dioxyde de carbone. Une telle atmosphère ne peut être assurée à un coût acceptable par les installations de séparation d'air pour la fourniture d'atmosphères contrôlées de conservation actuelles. Par ailleurs, ce type de conservation présente des spécificités saisonnières particulières qui ne justifient pas la mise en oeuvre de dispositifs de création d'atmosphères contrôlées très onéreux. En effet, s'agissant de pommes, l'utilisateur dispose typiquement d'un certain nombre de compartiments, par exemple dix, pouvant contenir chacun 300 tonnes de pommes. A la période de la récolte, l'utilisateur charge son enceinte de conservation au rythme d'un compartiment par jour, dans lequel le passage de l'atmosphère ambiante à l'atmosphère de conservation contrôlée doit être effectif en moins de 24 heures. Tout compartiment chargé et conditionné doit ensuite être maintenu pendant une longue période (pouvant dépasser six mois) dans les conditions de conservation optimales.

La présente invention a pour objet de proposer un procédé performant, fiable, et de faibles coûts permettant d'assurer, pendant la longue période de conservation, une teneur en oxygène très faible, n'excédant pas 1 %, et de traiter rapidement, et sans discontinuité, chaque compartiment individuellement en phase de chargement.

Pour ce faire, selon une caractéristique de l'invention, le procédé comprend les étapes de mettre en oeuvre au moins un premier et un second séparateurs en parallèle, connectables aux premier et second compartiments, de régler le premier séparateur pour produire en sortie une atmosphère ayant une première teneur en oxygène, typiquement n'excédant pas 1 %, de régler le second séparateur dans un premier mode pour produire en sortie une atmosphère ayant une seconde teneur en oxygène supérieure à la première teneur, typiquement d'environ 2 %, de charger le premier compartiment en produits frais, de connecter le second séparateur dans son premier mode au premier compartiment, de charger le second compartiment en produits frais, de connecter le premier compartiment au premier séparateur et de connecter le deuxième séparateur dans son premier mode au deuxième compartiment, puis, après une période déterminée, de fournir aux premier et second compartiments une atmosphère ayant la première teneur en oxygène, typiquement fournie par le premier séparateur et par le second séparateur réglé dans un deuxième mode pour fournir également en sortie une atmosphère ayant la première teneur en oxygène.

Selon une caractéristique particulière de l'invention, les premier et second séparateurs sont du type à membrane et les première et seconde teneurs en oxygène sont obtenues en modulant les débits de sortie respectifs des premier et second séparateurs qui sont typiquement alimentés par un groupe de compression commun, avantageusement avec interposition d'un poste d'épuration d'air commun.

Avec un tel procédé, mettant en oeuvre au moins deux séparateurs en parallèle, on peut, au moment de la récolte, affecter le second séparateur à la fourniture de l'atmosphère contrôlée de chargement des compartiments successifs alors que le premier séparateur est utilisé en permanence pour fournir aux compartiments déjà chargés l'atmosphère contrôlée d'entretien à très faible teneur en oxygène, le second séparateur venant suppléer le premier pour la phase d'entretien de longue période en fin de récolte.

La présente invention a également pour objet un dispositif pour la mise en oeuvre du procédé défini ci-dessus, comprenant un groupe de compression alimentant au moins un premier et un second séparateurs à membrane, des moyens de distribution reliant sélectivement la sortie de chaque séparateur aux compartiments de l'enceinte, et un moyen limiteur de débit réglable à la sortie des séparateurs respectifs.

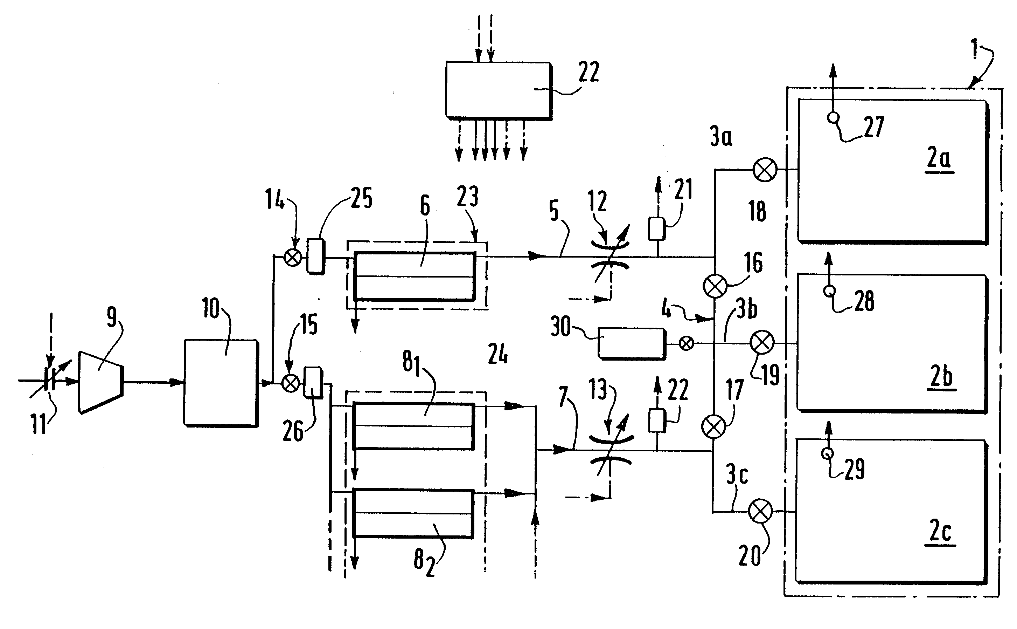

D'autres caractéristiques et avantages de la présente invention ressortiront de la description suivante d'un mode de réalisation, donné à titre illustratif mais nullement limitatif, faite en relation avec le dessin annexé, sur lequel :
- la figure unique représente schématiquement un dispositif pour la mise en oeuvre du procédé selon l'invention.

Sur la figure unique, on reconnaît une enceinte 1 de stockage et de conservation de fruits comportant une série de compartiments 2a-2c... pourvus chacun d'une conduite d'alimentation en gaz de conservation 3a-3c... reliée à une ligne d'alimentation et de distribution 4, et d'un orifice de fuite, pourvu d'un clapet anti-retour (non représenté).

Conformément à l'invention, la ligne 4 est reliée, par une conduite de distribution 5, à la sortie d'un premier perméateur à membrane 6, et, par une conduite de distribution 7 à la sortie d'au moins un, typiquement deux perméateurs à membrane 8₁, 8₂, selon la capacité et le nombre de compartiments 2 de l'enceinte 1. Les entrées des perméateurs 6, 8₁, 8₂, sont alimentées par un groupe de compression commun 9 via un épurateur 10, typiquement pour le déshuilage, le dépoussiérage et, le cas échéant, le réchauffage de l'air comprimé. L'entrée d'air du groupe de compression 9 est munie d'une vanne de régulation progressive 11. Chaque conduite 5, 7 est munie d'un restricteur de débit commandable 12, 13. Une vanne d'alimentation commandable en tout ou rien 14, 15, est prévue en amont, respectivement, du perméateur 6 et du groupe de perméateurs 8₁, 8₂. La ligne d'alimentation 4 comporte une série de vannes de distribution commandables tout ou rien 16, 17... de part et d'autre de chaque conduite 3 d'alimentation d'un compartiment 2. Chaque conduite d'alimentation 3 comportant une vanne d'alimentation tout ou rien 18, 19, 20. Chaque conduite de distribution 5, 7 est pourvue, en aval, d'un capteur de pression 21, 22, respectivement, fournissant un signal de pression représentatif de la pression dans les compartiments aval 2a, 2b, 2c à une unité centrale de commande 22 pour commander les vannes d'alimentation 14-15, l'unité centrale 22 assurant également la commande des restricteurs 11-13 et des diverses vannes de distribution 16-20...

Le fonctionnement du dispositif est le suivant : le restricteur 12 dans la conduite 5 est réglé de telle sorte que la teneur en oxygène du flux délivré par le premier perméateur 6 dans la conduite 5 n'excède pas 1 %. Le restricteur 13 dans la conduite 7 est, dans un premier temps, réglé de telle sorte que la teneur en oxygène du flux délivré par les seconds perméateurs 8 dans cette conduite 7 soient de l'ordre de 2 %. L'appel par le réseau de distribution 4, 3, des flux délivrés par les perméateurs 6, 8 est libre, le maintien des performances étant obtenu par le régulateur amont 11 qui assure le maintien de la pression d'air au refoulement quel que soit le débit consommé.

Au début de la récolte, l'utilisateur commence par charger le premier compartiment 2a. Une fois ce chargement effectué, le premier perméateur 6 est isolé par la valve 14 et, les vannes 19 et 20 étant fermées et les vannes 16-18 étant ouvertes, les seconds perméateurs 8 établissent rapidement, en moins de 24 heures, dans le compartiment 2a une atmosphère contrôlée de chargement avec une teneur en oxygène légèrement inférieure à 2 %, compte tenu de la respiration des produits. Les seconds perméateurs 8 sont alors isolés par la vanne 15. La vanne 14 est ouverte et la vanne 16 fermée, le premier perméateur 6 fournissant alors au premier compartiment 2a une atmosphère contrôlée avec une teneur en oxygène inférieure à 1 %. Pendant ce temps, l'utilisateur a commencé le chargement du second compartiment 2b. Une fois ce chargement terminé, les seconds perméateurs 8 sont de nouveau mis en oeuvre par ouverture de la vanne 15, les vannes 17 et 19 étant ouvertes et la vanne 20 fermée, pour instaurer rapidement dans le second compartiment 2b une première atmosphère contrôlée de chargement à teneur en oxygène légèrement inférieure à 2 %, à la suite de quoi la vanne 17 est fermée et le premier perméateur 6 alimente les deux compartiments 2a et 2b en atmosphère contrôlée à basse teneur en oxygène, et ainsi de suite.

Quand le dernier compartiment a été chargé et qu'y a été établie l'atmosphère contrôlée de chargement à teneur en oxygène supérieure à 1 %, toutes les vannes 14-20 étant ouvertes, le restricteur 13 en sortie des seconds perméateurs 8₁, 8₂ est réglé dans un deuxième mode pour que ces derniers produisent, comme le premier perméateur 6, une atmosphère contrôlée avec une teneur en oxygène n'excédant pas 1 %. Dans ce régime d'entretien, pouvant excéder 6 mois, quand un niveau de pression déterminé est atteint dans les conduites 5 et 7, l'une ou l'autre des vannes 14 et 15 isole le ou les perméateurs correspondants pour une durée fonction de la consommation d'azote dans les compartiments détectés par les capteurs 21-22, après quoi les perméateurs sont de nouveau rendus opérants.

Dans un mode de réalisation particulier, le premier perméateur 6 et le groupe des seconds perméateurs 8 sont disposés chacun dans une enceinte thermostatée 23 et 24, respectivement, et les ligne d'alimentation en air comprimé épuré du premier perméateur 6 et du groupe de seconds perméateurs 8 sont chacune avantageusement pourvues d'un réchauffeur 25, 26 permettant, notamment dans la phase de création d'atmosphère de chargement des compartiments, de réguler séparément la température des enceintes 23, 24 à une valeur de consigne supérieure à la valeur standard, ce qui permet d'augmenter temporairement la capacité de production des perméateurs et donc de réduire sensiblement leur nombre nécessaire pour obtenir un débit donné et partant, de réduire les frais d'installation du dispositif. On peut également améliorer la consommation énergétique moyenne du dispositif en prévoyant un groupe de compression 9 avec deux compresseurs exploités en réseau, un seul de ces compresseurs étant utilisé pendant la phase d'entretien alors que les deux sont utilisés dans la phase de création d'atmosphère de chargement en période de récolte.

Quoique la présente invention ait été décrite en relation avec des modes de réalisation particuliers, elle est susceptible de modifications et de variantes qui apparaîtront à l'homme de l'art. En particulier, la mise en oeuvre de l'un et/ou l'autre des groupes de perméateurs 6 et 8₁, 8₂ ---peut être commandée par des analyses d'oxygène dans les différents compartiments 2a-2c à partir de sondes 27-29 dans ces derniers, et/ou par des capteurs de pression dans la ligne 4, en amont des vannes respectives 16, 17, la ligne 4 pouvant être associée à un réservoir tampon 30. Enfin, les conduites d'alimentation 3a-3c peuvent être reliées à deux lignes d'alimentation distinctes 4, 4' reliées chacune à l'une des conduites de distribution 5 et 7.

## Revendications

1. Procédé d'établissement d'une atmosphère contrôlée à faible teneur en oxygène dans au moins un premier (2a) et un second (2b) compartiments d'une enceinte (1) de conservation de produits végétaux alimentaires frais au moyen d'une installation de séparation d'air non cryogénique (6;8), caractérisé en ce qu'il comprend les étapes suivantes :
a) mettre en oeuvre au moins un premier (6) et un second (8₁, 8₂) séparateurs en parallèle connectables aux premier (2a) et second (2b) compartiments ;
b) régler le premier séparateur (6) pour produire en sortie une atmosphère ayant une première teneur en oxygène ;
c) régler le second séparateur (8₁, 8₂) dans un premier mode pour produire en sortie une atmosphère ayant une seconde teneur en oxygène supérieure à la première teneur ;
d) charger le premier compartiment (2a) en produits frais ;
e) connecter le second séparateur (8₁, 8₂) dans son premier mode au premier compartiment (2a) ;
f) charger le second compartiment (2b) en produits frais ;
g) connecter le premier compartiment (2a) au premier séparateur (6) et connecter le second séparateur (8₁, 8₂) dans son premier mode au second compartiment (2b) ;
h) et, après une période déterminée, fournir aux premier (2a) et second (2b) compartiments une atmosphère ayant la première teneur en oxygène.

2. Procédé selon la revendication 1, caractérisé en ce qu'après la période déterminée, le second séparateur (8₁, 8₂) est réglé dans un deuxième mode pour fournir en sortie une atmosphère ayant la première teneur en oxygène.

3. Procédé selon la revendication 1 ou la revendication 2, caractérisé en ce que les premier (6) et second (8₁, 8₂) séparateurs sont du type à membrane et en ce que les première et seconde teneurs en oxygène sont obtenues en modulant les débits de sortie respectifs des premier et second séparateurs.

4. Procédé selon la revendication 3, caractérisé en ce que les premier (6) et second (8₁, 8₂) séparateurs sont alimentés par un groupe de compression commun (9) et en ce qu'il comporte l'étape d'épurer (10) le gaz comprimé fourni par le groupe de compression.

5. Procédé selon l'une des revendications 1 à 4, caractérisé en ce que, pendant l'étape h), la fourniture aux compartiments (2a, 2b) de l'atmosphère ayant la première teneur en oxygène est modulée en fonction de la pression de l'atmosphère contrôlée fournie aux compartiments.

6. Procédé selon l'une des revendications 1 à 5, caractérisé en ce que les séparateurs (6 ; 8₁ ; 8₂) sont mis en oeuvre en fonction de la teneur en oxygène détectée (27-29) dans les compartiments (2a-2c).

7. Procédé selon l'une des revendications 3 à 6, caractérisé en ce qu'il comprend l'étape de réguler (26) la température d'au moins le second séparateur (8₁, 8₂).

8. Procédé selon la revendication 7, caractérisé en ce que, pendant au moins une partie de l'étape e), on augmente la température du gaz fourni au second séparateur (8₁, 8₂).

9. Procédé selon l'une des revendications 1 à 8, caractérisé en ce que la première teneur en oxygène n'excède pas 1 %, la seconde teneur en oxygène étant d'environ 2 %.

10. Dispositif d'établissement d'une atmosphère contrôlée dans au moins un premier (2a) et un second (2b) compartiments d'une enceinte (1) de conservation pour la mise en oeuvre du procédé selon l'une des revendications 3 à 9, caractérisé en ce qu'il comprend un groupe de compression (9) alimentant au moins un premier (6) et un second (8₁, 8₂) séparateurs à membrane, des moyens de distribution (3, 4) reliant sélectivement la sortie de chaque séparateur aux compartiments, et un moyen limiteur de débit (12 ; 13) réglable à la sortie des séparateurs respectifs.

11. Dispositif selon la revendication 10, caractérisé en ce qu'il comporte à l'entrée du premier (6) et du second (8₁, 8₂) séparateurs une vanne d'alimentation (14, 15) actionnable en réponse à un signal de pression fourni par un capteur de pression (21 ; 22) en aval des séparateurs.

12. Dispositif selon la revendication 10 ou la revendication 11, caractérisé en ce qu'il comporte des moyens (25) pour moduler la température du gaz fourni à au moins un (8₁, 8₂) des séparateurs.

13. Dispositif selon l'une des revendications 10 à 12, caractérisé en ce qu'il comporte au moins trois séparateurs (6, 8₁, 8₂).

14. Dispositif selon l'une des revendications 10 à 13, caractérisé en ce qu'il comporte un moyen (11) de réglage du débit d'alimentation du groupe de compression (9).

15. Dispositif selon l'une des revendications 10 à 14, caractérisé en ce qu'il comporte au moins un analyseur d'oxygène (27-29) associé aux compartiments (2a-2c).

## Claims

1. Method for establishing a controlled atmosphere with a low oxygen content in at least a first (2a) and a second (2b) compartment of an enclosure (1) for preserving fresh vegetable food products by means of a non-cryogenic air separation installation (6; 8), characterised in that it comprises the following steps:
a) using at least a first (6) and a second (8₁, 8₂) separator in parallel, able to be connected to the first (2a) and second (2b) compartments;
b) regulating the first separator (6) in order to produce at the output an atmosphere having a first oxygen content;
c) regulating the second separator (8₁, 8₂) in a first mode in order to produce at the output an atmosphere having a second oxygen content greater than the first content;
d) loading the first compartment (2a) with fresh products;
e) connecting the second separator (8₁, 8₂) in its first mode to the first compartment (2a);
f) loading the second compartment (2b) with fresh products;
g) connecting the first compartment (2a) to the first separator (6) and connecting the second separator (8₁, 8₂) in a first mode to the second compartment (2b);
h) and, after a predetermined period, supplying the first (2a) and second (2b) compartments with an atmosphere having the first oxygen content.

2. Method according to Claim 1, characterised in that, after the predetermined period, the second separator (8₁, 8₂) is regulated in a second mode in order to supply at the output an atmosphere having the first oxygen content.

3. Method according to Claim 1 or Claim 2, characterised in that the first (6) and second (8₁, 8₂) separators are of the type having a membrane and in that the first and second oxygen contents are obtained by modulating the respective output flows of the first and second separators.

4. Method according to Claim 3, characterised in that the first (6) and second (8₁, 8₂) separators are fed by a common compression unit (9) and in that it includes the step of purifying (10) the compressed gas supplied by the compression unit.

5. Method according to one of Claims 1 to 4, characterised in that, during step h), the supply, to the compartments (2a, 2b), of the atmosphere having the first oxygen content is modulated according to the pressure of the controlled atmosphere supplied to the compartments.

6. Method according to one of Claims 1 to 5, characterised in that the separators (6; 8₁; 8₂) are used in accordance with the oxygen content detected (27-29) in the compartments (2a-2c).

7. Method according to one of Claims 3 to 6, characterised in that it comprises the step of regulating (26) the temperature of at least the second separator (8₁, 8₂).

8. Method according to Claim 7, characterised in that, for at least part of step e), the temperature of the gas supplied to the second separator (8₁, 8₂) is increased.

9. Method according to one of Claims 1 to 8, characterised in that the first oxygen content does not exceed 1%, the second oxygen content being approximately 2%.

10. Device for establishing a controlled atmosphere in at least a first (2a) and a second (2b) compartment of a preservation enclosure (1) for implementing the method according to one of Claims 3 to 9, characterised in that it comprises a compression unit (9) feeding at least a first (6) and a second (8₁, 8₂) membrane separator, distribution means (3, 4) selectively connecting the output of each separator to the compartments, and an adjustable flow limitation means (12; 13) at the output of the respective separators.

11. Device according to Claim 10, characterised in that it includes at the input of the first (6) and of the second (8₁, 8₂) separator a supply valve (14, 15) able to be actuated in response to a pressure signal supplied by a pressure sensor (21; 22) downstream from the separators.

12. Device according to Claim 10 or Claim 11, characterised in that it includes means (25) for modulating the temperature of the gas supplied to at least one (8₁, 8₂) of the separators.

13. Device according to one of Claims 10 to 12, characterised in that it includes at least three separators (6, 8₁, 8₂).

14. Device according to one of Claims 10 to 13, characterised in that it includes a means (11) for regulating the feed flow of the compression unit (9).

15. Device according to one of Claims 10 to 14, characterised in that it includes at least one oxygen analyser (27-29) associated with the compartments (2a-2c).

## Patentansprüche

1. Verfahren zum Herstellen einer kontrollierten Atmosphäre mit geringem Sauerstoffgehalt in mindestens einer ersten Kammer (2a) und einer zweiten Kammer (2b) eines Behälters (1) zur Konservierung frischer pflanzlicher Lebensmittel mittels einer nichtkryogenen Luftzerlegungsanlage (6;8), gekennzeichnet durch die folgenden Schritte:
a) Verwenden von zumindest einem ersten Separator (6) und einem zweiten Separator (8₁, 8₂), die parallel zueinander angeordnet und an die erste Kammer (2a) und die zweite Kammer (2b) anschließbar sind;
b) Einstellen des ersten Separators (6), um am Ausgang eine Atmosphäre mit einem ersten Sauerstoffgehalt zu erzeugen;
c) Einstellen des zweiten Separators (8₁, 8₂) in einer ersten Betriebsart, um am Ausgang eine Atmosphäre mit einem zweiten Sauerstoffgehalt zu erzeugen, der größer als der erste Gehalt ist;
d) Beschicken der ersten Kammer (2a) mit frischen Produkten;
e) Verbinden des zweiten Separators (8₁, 8₂) in seiner ersten Betriebsart mit der ersten Kammer(2a);
f) Beschicken der zweiten Kammer (2b) mit frischen Produkten;
g) Verbinden der ersten Kammer (2a) mit dem ersten Separator (6) und Verbinden des zweiten Separators (8₁, 8₂) in seiner ersten Betriebsart mit der zweiten Kammer (2b); und
h) nach einer bestimmten Zeitdauer Liefern einer Atmosphäre mit dem ersten Sauerstoffgehalt an die erste Kammer (2a) und die zweite Kammer (2b).

2. Verfahren nach Anspruch 1, dadurch gekennzeichnet, daß nach der bestimmten Zeitdauer der zweite Separator (8₁, 8₂) auf eine zweite Betriebsart umgestellt wird, um am Ausgang eine Atmosphäre mit dem ersten Sauerstoffgehalt bereitzustellen.

3. Verfahren nach Anspruch 1 oder 2, dadurch gekennzeichnet, daß der erste (6) und der zweite (8₁, 8₂) Separator nach dem Membranprinzip arbeiten und daß der erste und der zweite Sauerstoffgehalt erzielt werden, indem man die jeweiligen Ausgangsdurchflüsse des ersten und zweiten Separators moduliert.

4. Verfahren nach Anspruch 3, dadurch gekennzeichnet, daß der erste (6) und der zweite (8₁, 8₂) Abscheider von einer gemeinsamen Kompressorgruppe (9) gespeist werden und daß es einen Schritt zum Reinigen (10) des von der Kompressorgruppe gelieferten komprimierten Gases umfaßt.

5. Verfahren nach einem der Ansprüche 1 bis 4, dadurch gekennzeichnet, daß während des Schrittes (h) die Lieferung der Atmosphäre mit dem ersten Sauerstoffgehalt an die Kammern (2a, 2b) in Abhängigkeit von dem an die Kammern gelieferten Druck der kontrollierten Atmosphäre geändert wird.

6. Verfahren nach einem der Ansprüche 1 bis 5, dadurch gekennzeichnet, daß die Separatoren (6; 8₁, 8₂) in Abhängigkeit von dem in den Kammern (2a - 2c) erfaßten (27 - 29) Sauerstoffgehalt verwendet werden.

7. Verfahren nach einem der Ansprüche 3 bis 6, dadurch gekennzeichnet, daß es einen Schritt zum Einstellen (26) der Atmosphäre des zumindest zweiten Separators (8₁, 8₂) umfaßt.

8. Verfahren nach Anspruch 7, dadurch gekennzeichnet, daß man mindestens während einem Teil des Schrittes e) die Temperatur des an den zweiten Separator (8₁, 8₂) gelieferten Gases erhöht.

9. Verfahren nach einem der Ansprüche 1 bis 8, dadurch gekennzeichnet, daß der erste Sauerstoffgehalt 1% nicht übersteigt und der zweite Sauerstoffgehalt ungefähr 2% ist.

10. Vorrichtung zum Herstellen einer kontrollierten Atmosphäre in zumindest einer ersten Kammer (2a) und einer zweiten Kammer (2b) eines Behälters (1) zur Konservierung für die Verwendung des Verfahrens nach einem der Ansprüche 3 bis 9, dadurch gekennzeichnet, daß sie eine Kompressorgruppe (9), die zumindest einen ersten (6) und einen zweiten (8₁, 8₂) Membranseparator versorgt, Verteilungseinrichtungen (3, 4), die den Ausgang jedes Separators selektiv mit den Kammern verbinden, und eine einstellbare Durchflußbegrenzungseinrichtung (12; 13) am Ausgang des jeweiligen Separators aufweist.

11. Vorrichtung nach Anspruch 10, dadurch gekennzeichnet, daß sie am Eingang des ersten (6) und des zweiten (8₁, 8₂) Separators ein Zufuhrventil (14, 15) aufweist, das in Abhängigkeit von einem Drucksignal betätigbar ist, das von einem Drucksensor (21; 22) stromab von den Separatoren geliefert wird.

12. Vorrichtung nach Anspruch 10 oder 11, dadurch gekennzeichnet, daß sie Einrichtungen (25) zum Ändern der Temperatur des Gases aufweist, das an zumindest einen (8₁, 8₂) der Separatoren geliefert wird.

13. Vorrichtung nach einem der Ansprüche 10 bis 12, dadurch gekennzeichnet, daß sie mindestens drei Separatoren (6, 8₁, 8₂) aufweist.

14. Vorrichtung nach einem der Ansprüche 10 bis 13, dadurch gekennzeichnet, daß sie eine Einrichtung (11) zur Regelung des Zufuhrdurchflusses der Kompressorgruppe (9) aufweist.

15. Vorrichtung nach einem der Ansprüche 10 bis 14, dadurch gekennzeichnet, däß sie mindestens einen Sauerstoffanalysator (27 - 29) aufweist, der den Kammern (2a - 2c) zugeordnet ist.
